# EUROPEAN PATENT APPLICATION

(11) **EP 2 538 694 A1**
(43) Date of publication of application: **26.12.2012**
(21) Application number: 12162728.5
(22) Date of filing: 30.03.2012
(51) Int. Cl.: H04N 21/4425, H04N 21/6543

(54) **Settop box and diagnosing method thereof**

(30) Priority: 20.06.2011 KR 20110059655
(71) Applicant: Samsung Electronics Co., Ltd., Suwon-si, Gyeonggi-do, 443-742 (KR)
(72) Inventor: Kim, Young-min, Gyeonggi-do (KR)
(74) Representative: Walaski, Jan Filip

(57) **Abstract**

A settop box and a diagnosing method thereof are provided. The settop box 200 includes a security shell interface unit 210 which provides secured access by authenticating a terminal 100 when the terminal accesses the settop box through a security shell terminal; a storage unit 250 which stores diagnostic information of the settop box 200; and a diagnostic information processing unit 230 which provides the diagnostic information stored in the storage unit 250 to the terminal side when a diagnostic information request is received from the terminal 100.

## Description

Apparatuses and methods consistent with exemplary embodiments relate to a settop box and a diagnostic method thereof, the set top box capable of being remotely diagnosed in a digital broadcasting system, and more particularly, to a settop box and a diagnostic method thereof in which diagnostic information thereof is monitored by being remotely accessed using a security shell and an operation state thereof is checked.

In general, settop boxes include devices capable of diagnosing a channel reception state, audio/video information, network information, and the like therein. When a cable enterprise or a settop box manufacturer executes a desired diagnostic menu to control a set box which is operating, a state of the settop box is displayed through an output device such as a television (TV) connected to the settop box.

However, since the diagnostic method has a limit to individually diagnose/control settop boxes installed in users' homes, a diagnostic apparatus or the like using a simple network management protocol (SNMP) has been suggested and used as a method of remotely diagnosing the settop boxes.

The diagnostic method using the SNMP has been suggested for a bidirectional transmittable cable network in recent years. The diagnostic method of the settop box using the SNMP confirms only simpler information than detailed information as when directly monitoring diagnostic information.

Further, a method of remotely controlling a settop box by a SNMP request control message through a cable modem thereof using the SNMP as a network control protocol to the settop box has already been widely used as a remote settop box control method. However, since the SNMP is inherently made to diagnose network equipments, the SNMP should be used in a fixed specification and thus, it is difficult to define the SNMP only to a settop box.

For example, unique functions of the settop box may not be used when the functions are not defined in the specification of the SNMP and to add management information base (MIB) of a new item, an object identifier (OID) should be received and used from an Internet assigned numbers authority (IANA).

Further, the diagnostic method has disadvantages in that a module capable of processing the SNMP protocol should be installed on the settop box, the settop box may be overloaded when an SNMP manager and an SNMP agent operate, and a complicated process of considering entirely different modules associated with the SNMP is required to partially change or manage the settop box

One or more exemplary embodiments may overcome the above disadvantages and/or other disadvantages not described above. However, it is understood that one or more exemplary embodiment are not required to overcome the disadvantages described above, and may not overcome any of the problems described above.

One or more exemplary embodiments provide a settop box and a diagnostic method thereof capable of extracting diagnostic information data being used in the settop box while maintaining a level of security between a terminal and the settop box not through a headend, but by remotely accessing the settop box by the terminal through a security shell terminal, and extracting and monitoring diagnostic information of the settop box without modifying applications installed in the settop box.

According to an aspect of the invention, there is provided a settop box. The settop box includes: a security shell interface unit which provides secured access by authenticating a terminal when the terminal accesses the settop box through a security shell terminal; a storage unit which stores diagnostic information of the settop box; and a diagnostic information processing unit which provides the diagnostic information stored in the storage unit to the terminal side when a diagnostic information request is received from the terminal.

The security shell interface unit may transmit a remote diagnostic information menu to the terminal when the terminal is authenticated to make the security access.

The diagnostic information processing unit may extract diagnostic information of the settop box corresponding to a selected item when any one item of the remote diagnostic information menu of the settop box is selected by the terminal.

The diagnostic information processing unit may terminate extraction of the diagnostic information of the settop box when an END item of the remote diagnostic information menu of the settop box is selected at the terminal.

The diagnostic information processing unit may iteratively update the diagnostic information of the settop box every predetermined waiting time.

The storage unit may store diagnostic information according to a diagnostic information request before termination of the security access when the security access between the terminal and the settop box is terminated.

The diagnostic information may be graphic user interface (GUI) screen data indicating a state of the settop box.

According to another aspect of the invention, there is provided a diagnostic method of a settop box. The method includes: providing secured access by authenticating a terminal when the terminal accesses the settop box through a security shell terminal; and providing diagnostic information of the settop box to the terminal when a diagnostic information request is received from the terminal side.

The method may further include transmitting a remote diagnostic information menu to the terminal when the terminal is authenticated to make the security access.

The method may further include extracting diagnostic information of the settop box corresponding to a selected item when any one item of the remote diagnostic information menu of the settop box is selected by the terminal.

The method may further include terminating extraction of the diagnostic information of the settop box when an END item of the remote diagnostic information menu of the settop box is selected at the terminal.

The method may further include iteratively updating the diagnostic information of the settop box every predetermined waiting time.

The method may further include storing diagnostic information according to a diagnostic information request before termination of the security access when the security access between the terminal and the settop box is terminated.

The method may further include packetizing the diagnostic information to uplink and transmit the diagnostic information; and encrypting the packetized diagnostic information and transmitting the encrypted diagnostic information to the terminal.

The diagnostic information may be GUI screen data indicating a state of the settop box.

According to another aspect of the invention, there is provided a non-transitory computer-readable recording medium including a program executing a diagnostic method of a settop box. The diagnostic method includes: providing secured access to a settop box by authenticating a terminal when the terminal accesses the settop box through a security shell terminal; and providing diagnostic information of the settop box to the terminal when a diagnostic information request is received from the terminal side.

As described above, according to the exemplary embodiments, the terminal remotely accesses the settop box through the security shell terminal to maintain security between the terminal and the settop box and to extract diagnostic information data being used in the settop box not through the headend. Further, the diagnostic information of the settop box may be extracted and monitored without limitation of a specification of the settop box to easily and conveniently manage the settop box.

Additional aspects of the exemplary embodiments will be set forth in the detailed description, will be obvious from the detailed description, or may be learned by practicing the exemplary embodiments.

The above and/or other aspects will be more apparent by describing in detail exemplary embodiments, with reference to the accompanying drawings, in which:
FIG. 1 is a schematic configuration diagram illustrating a network between a terminal of a cable enterprise and a settop box according to an embodiment;
FIG. 2 is a block diagram illustrating a settop box according to an embodiment;
FIG. 3 is a view representing a diagnostic information list of a settop box according to an embodiment;
FIG. 4 is a view illustrating an example of a user interface window to be displayed in the terminal of FIG. 1;
FIG. 5 is a flowchart illustrating a diagnostic method of a settop box according to an embodiment;
FIG. 6 is a flowchart specifically illustrating the diagnostic method of a settop box of FIG.5;
FIG. 7 is a flowchart illustrating a diagnostic method of a settop box according to another embodiment; and
FIG. 8 is an illustrative view illustrating a process of authenticating a terminal in the diagnostic method of a settop box of FIG.7.

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the embodiments. Thus, it is apparent that the embodiments can be carried out without those specifically defined matters. Also, functions or elements known in the related art are not described in detail since they would obscure the embodiments with unnecessary detail.

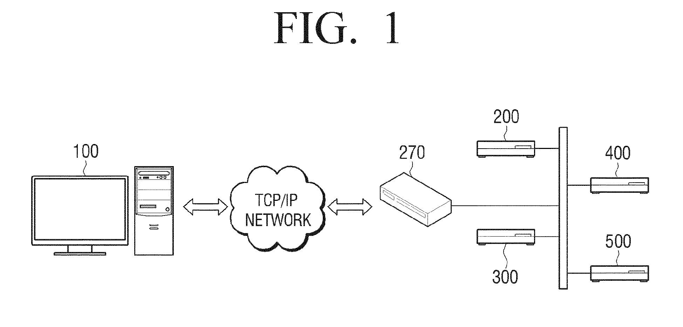

FIG. 1 is illustrates a schematic configuration diagram of a network between a terminal of a cable enterprise and a settop box according to an embodiment.

Referring to FIG. 1, a terminal 100 of a cable enterprise (hereinafter, referred to as a terminal) may be connected to a cable network through a transmission control protocol/internet protocol (TCP/IP) network. The cable network may connect a plurality of settop boxes 200 to 500 to each other and may connect the plurality of settop boxes 200 to 500 to the TCP/IP network through a cable modem termination system (CMTS) 270. The cable enterprise may access the plurality of settop boxes 200 to 500 having respective IP addresses individually through the terminal 100 to which Internet is connected.

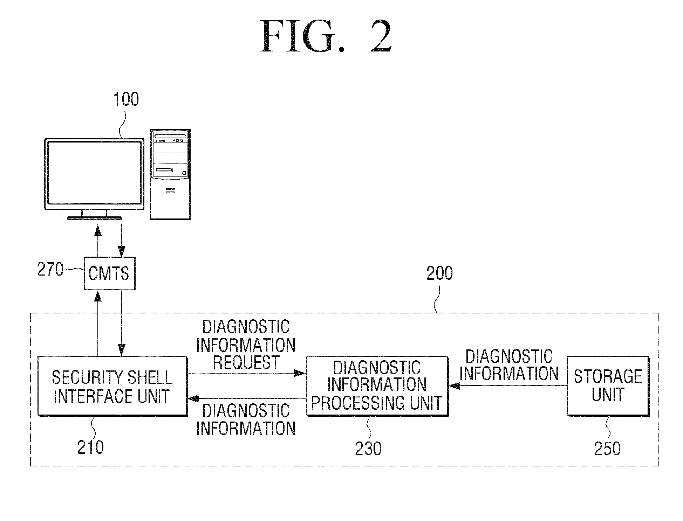

FIG. 2 illustrates a block diagram of a settop box according to an embodiment.

The settop box 200 according to an embodiment will be specifically described with reference to FIG. 2 below. Referring to FIG. 2, the settop box 200 may include a security shell interface unit 210, a diagnostic information processing unit 230, and a storage unit 250.

The security shell interface unit 210 may be connected to a TCP/IP network (not shown) via the CMTS 270 through a cable modem (not shown) to interface with the terminal 100 connected to the TCP/IP network. At this time, the security shell interface unit 210 may form a security channel between the terminal 100 and the diagnostic information processing unit 230.

The forming of the security channel will be specifically described below. The security shell interface unit 210 may form the security channel using a security shell terminal. For example, the terminal 100 may access the settop box 200 through the security shell terminal.

Here, the security shell terminal is a kind of a security system which may enable the remote terminal 100 to access a remote system and execute a command to the settop box 200 through the terminal 100, and perform a network function to copy a file and the like from the settop box 200.

The security shell terminal may use a safe encryption security terminal session. That is, the security shell terminal may respond to a security threat such as a man in the middle (MITM) attack through a high-order security algorithm (3DES, Blowfish, Twofish, Arcfour, Cast 128-cbc) and a strong authentication method (public key (digital signature algorithm (DSA), RSA, or the like)-based authentication method).

According to an embodiment, the security shell terminal requests input of an identification (ID) and a password of a user when the user accesses by the security shell port and forms a security channel with the settop box only for a terminal of a user who inputs correct ID and password.

The above-described encryption algorithm may use a scheme in which stability is internationally verified and may be designed not to use false access identity in the middle of a network through the public key-based authentication method or not to intercept data by making the full text of communication to a plain text.

The security shell interface unit 210 authenticates whether or not the terminal 100 accessed through the security shell terminal is an authorized user through the above-described method (for example, authentication of ID and password). The security shell interface unit 210 permits the authenticated terminal 100 to access the diagnostic information processing unit 230 of the settop box 200, if the user is an authorized user.

The security shell interface unit 210 may transmit a remote diagnostic information list of a corresponding settop box to the authenticated terminal 100. Here, the remote diagnostic information list denotes a list in which diagnostic information of the settop box 200 having a predetermined IP address is classified according to a category. The remote diagnostic information list may be variously represented according to an apparatus characteristic of the corresponding settop box 200 and the remote diagnostic information list of various types will be illustratively described with reference to the drawings below.

When a diagnostic information request is received from the terminal 100 through the security shell interface unit 210, the diagnostic information processing unit 230 may extract data associated with diagnostic information of a corresponding settop box of data to be processed in an internal operation module (not shown) of the settop box or extract diagnostic information previously stored in the storage unit 250.

Specifically, a cable enterprise accesses the settop box 200 through the authenticated terminal 100 and receives the remote diagnostic information list from the security shell interface unit 210.

When the cable enterprise selects one item of the remote diagnostic information list through the terminal 100, the diagnostic information processing unit 230 may extract diagnostic information of the settop box 200 corresponding to the selected item. The diagnostic information processing unit 230 may be configured to extract data to be processed in an internal operation module of the settop box, for example, a channel reception state, audio/video information, network information, and the like.

At this time, an END item of the remote diagnostic information menu of the settop box 200 is selected at the terminal 100, the diagnostic information processing unit 230 may terminate extraction of the diagnostic information of the settop box 200.

The diagnostic information processing unit 230 may iteratively update the diagnostic information of the settop box 200 every preset waiting time. The waiting time may be set in the beginning of an operation of the diagnostic information processing unit 230, but the preset waiting time may be changed later.

The storage unit 250 may store diagnostic information data of the settop box 200 extracted by the diagnostic information processing unit 230. The storage unit 250 may store the diagnostic information data updated by the diagnostic information processing unit 230 every preset waiting time. The storage unit 250 may be implanted by a memory device which may store the diagnostic information data even in power-off. The storage principle of the storage unit 250 may be understood by the skilled in the art and thus, its detailed description will be omitted.

The storage unit 250 may store the diagnostic information data processed by the diagnostic information processing unit 230. In addition, the storage unit 250 may transmit the diagnostic information data stored therein to the security shell interface unit 210 by request of the security shell interface 210.

That is, the storage unit 250 may store the diagnostic information data extracted by the diagnostic information processing unit 230 and update the pre-stored diagnostic information data as the diagnostic information updated by the diagnostic information processing unit 230 in a preset cycle.

Further, the storage unit 250 may transmit the diagnostic information data stored in the storage unit 250 to the terminal 100 through the security shell interface unit 210 by request of the security shell interface unit 210.

As described above, an extraction operation of the diagnostic information data of the diagnostic information processing unit 230 is iteratively performed in a fixed cycle, so that the storage unit 250 may be implemented to update the pre-stored diagnostic information data.

When the security access between the terminal 100 and the settop box 200 is terminated, the storage unit 250 may be implemented to store diagnostic information extracted according to diagnostic information request just before the termination.

That is, when the security access, i.e., secured access, between the terminal 100 and the settop box 200 is terminated, in the case where the diagnostic information is extracted by the diagnostic information processing unit 230 just before the termination, the storage unit 250 may store the extracted diagnostic information.

When the diagnostic information is not extracted by the diagnostic information processing unit 230 before termination of the security access, the storage unit 250 maintains the pre-stored diagnostic information data.

A principle of access of the settop box 200 to the terminal 100 through a TCP/IP network will be described with reference to FIG. 2 below.

First, the settop box 200 may access to the TCP/IP network through the CMTS 270. Although FIG. 2 illustrates that the CMTS 270 is separately provided from the settop box 200, the CMTS 270 may be configured to be included in the settop box 200.

Here, the CMTS 270 may perform a function of packetization of the diagnostic information to uplink and transmit the diagnostic information stored in the storage unit 250 to the terminal 100.

The diagnostic information packetized by the CMTS 270 may be encrypted through the security shell interface unit 210 and the encrypted diagnostic information may be transmitted to the terminal 100.

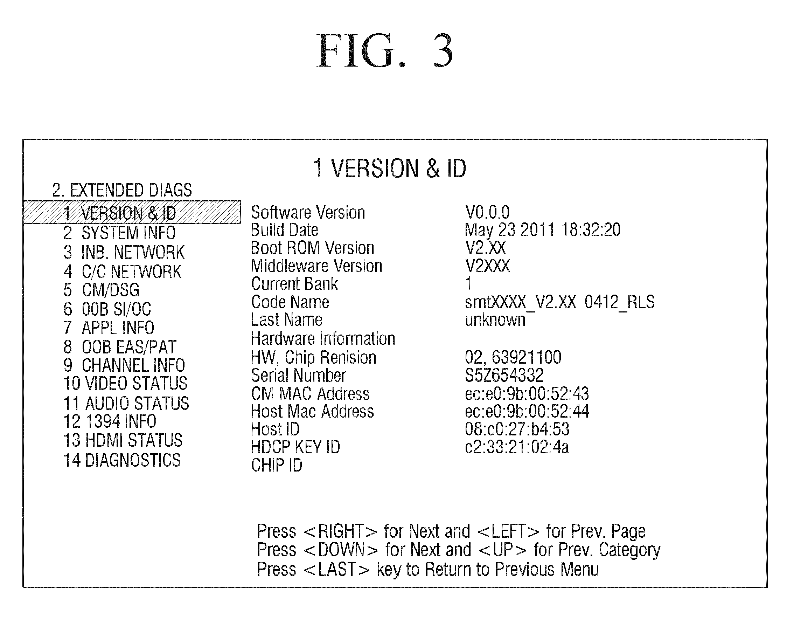

FIG. 3 is a view representing a diagnostic information list of a settop box according to an embodiment.

The diagnostic information list illustrated in FIG. 3 corresponds to an illustrative user interface window of a diagnostic information list displayed on a screen of a television (TV) connected to the settop box 200.

That is, the diagnostic information list of the settop box includes data representing characteristics of the settop box.

The data associated with the settop box may be stored in a storage part installed in an internal operation module of the settop box. A function of the storage part may be performed in the storage unit 250. Alternatively, the storage part may be an existing storage device installed in the settop box separated from the storage unit 250.

Further, referring to a center portion of FIG. 3, it can be determined that an item is selected and a software version and hardware information of the settop box according to the selected item are displayed on a screen.

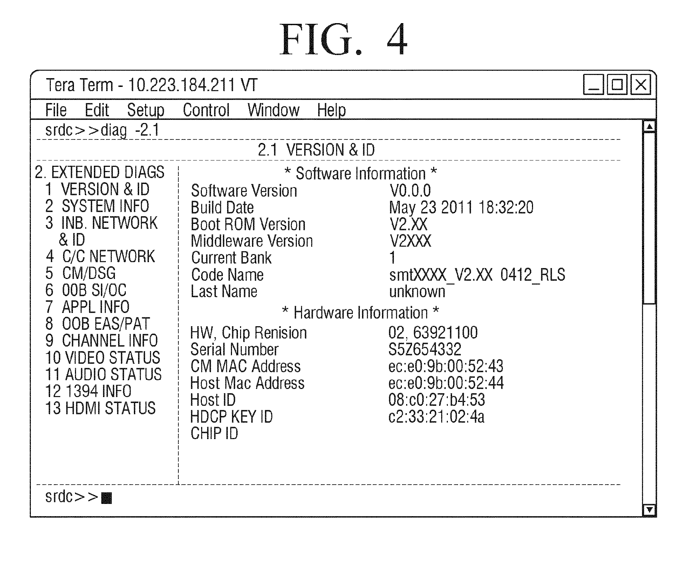

FIG. 4 is a view illustrating a user interface window to be displayed in the terminal 100 of FIG.1.

Referring to FIG. 4, it can be determined that a remote diagnostic information list displayed in the remote terminal is displayed in a similar form to the diagnostic information list of FIG. 3.

That is, it can be determined that vertically arranged items in the left side of FIG. 4 correspond to vertically arranged items in the left side of FIG. 3. Further, it can be determined that detailed content of diagnostic information displayed in the center of FIG. 4 correspond to detailed content of the diagnostic information displayed in the center of FIG. 3.

Therefore, in the remotely diagnosable settop box, the diagnostic information list of the settop box may be determined through the remote terminal in a real time and the detailed information may be determined by selecting a detailed item of the diagnostic information list menu.

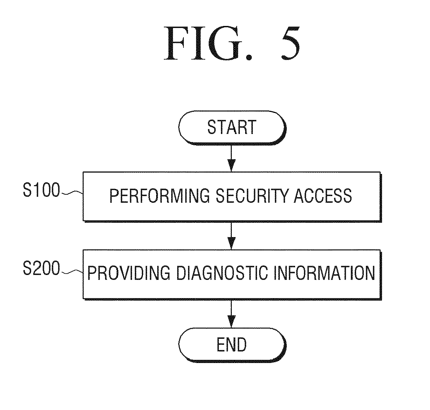

FIG. 5 is a flowchart illustrating a diagnostic method of a settop box according to an embodiment.

The diagnostic method of a settop box according to an exemplary embodiment may include an operation S100 of performing a secured access of the terminal to the settop box and an operation S200 of providing diagnostic information to the terminal.

The operation S100 of performing the secured access incudes authenticating the terminal 100 by the security shell interface unit 210 when the terminal 100 accesses the settop box 200 through a security shell terminal and permits the security access of the terminal 100 to the diagnostic information processing unit 230.

The operation S200 of proving the diagnostic information to the terminal includes extracting diagnostic information from an internal operation module (not shown) of the settop box 200 or providing the diagnostic information stored in the storage unit 250 to the terminal 100 side, when the diagnostic information processing unit 230 receives a diagnostic information request from the authenticated terminal.

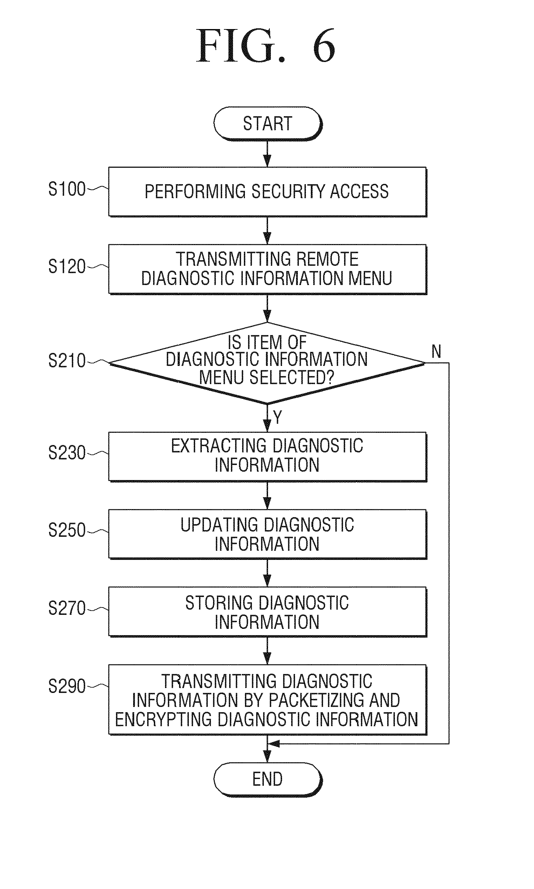

FIG. 6 is a flowchart specifically illustrating the diagnostic method of a settop box of FIG. 5.

A diagnostic method of a settop box according to another exemplary embodiment will be described with reference to FIG. 6 below.

The operation S100 of providing secured access may include permitting secured access between the terminal 100 and the diagnostic information processing unit 230 when the security shell interface unit 210 authenticates the terminal 100.

The security shell interface unit 210 may perform the operation S120 of transmitting a remote diagnostic information menu to the terminal 100 after permission for the secured access.

After the security shell interface unit 210 performs the operation S120 of transmitting the remote diagnostic information menu to the terminal 100, the operation S210 of selecting any one item of the remote diagnostic information menu of the settop box 200 at the terminal 100 may be performed.

After the one item of the remote diagnostic information menu is selected, the diagnostic information processing unit 230 may perform the operation S230 of extracting diagnostic information of the settop box corresponding to the selected item.

When any item of the remote diagnostic information menu of the settop box 200 has not been selected by the terminal 100 and a fixed time has elapsed after the remote diagnostic information menu is transmitted to the terminal 100, the diagnostic information processing unit 230 may perform, the operation of terminating the remote diagnosis without extracting diagnostic information.

After the diagnostic information processing unit 230 extracts the diagnostic information of the settop box 200, the diagnostic information processing unit 230 may further perform the operation S250 of iteratively updating the diagnostic information of the settop box 200 every predetermined waiting time.

After the diagnostic information processing unit 230 extracts the diagnostic information of the settop box 200, the storage unit 250 may perform the operation S270 of storing the extracted diagnostic information.

When the security access between the terminal 100 and the diagnostic information processing unit 230 is terminated after the diagnostic information processing unit 230 extracts the diagnostic information of the settop box 200, the storage unit 250 may perform the operation of storing diagnostic information according to a diagnostic information request before the termination.

The operation S290 of packetizing the diagnostic information by the CMTS 270 to uplink and transmit the diagnostic information stored in the storage unit 250 to the terminal 100 and transmitting the packetized diagnostic information to the terminal 100 by the security shell interface unit 201 through a security shell terminal may be performed. At this time, the packetized diagnostic information is transmitted to the terminal 100 through the security shell terminal in an encrypted form.

The security shell interface unit 210 may transmit the diagnostic information to the terminal 100 in the graphic user interface (GUI) screen data form indicating a state of the settop box 200. The GUI screen data form may be displayed on a screen of the terminal 100.

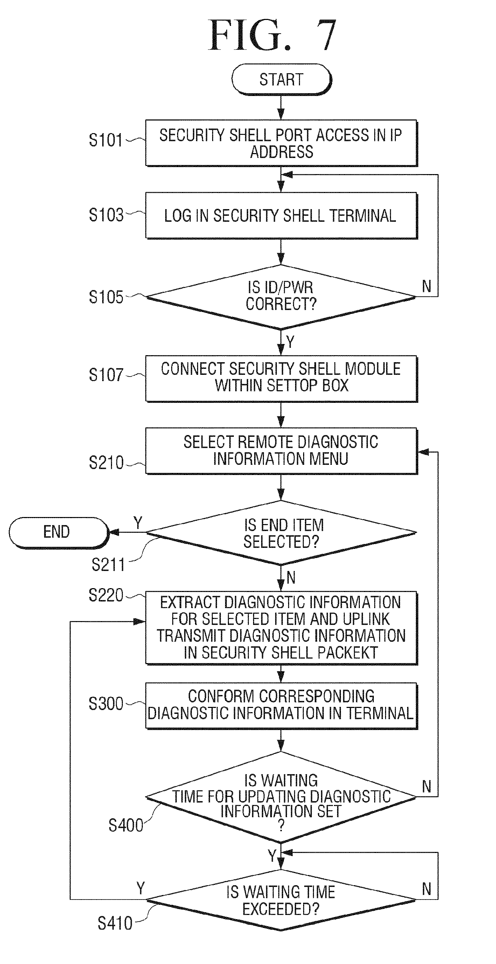

FIG. 7 is a flowchart illustrating a diagnostic method of a settop box according to another exemplary embodiment.

A remote diagnostic method of a settop box according to another exemplary embodiment will be described with reference to FIG. 7 below.

A cable enterprise may perform the operation S101 of accessing to the settop box by a security shell port using an IP address of the settop box to be diagnosed through a remote terminal.

The security shell port access to the settop box having a predetermined IP address through the terminal by the cable enterprise is obtained through TCP/IP network access. The TCP/IP network access is understood by the skilled in the art and thus, detailed description thereof will be omitted.

The security shell interface unit 210 may perform the operation S103 of logging in the security shell terminal when the cable enterprise accesses the settop box having the predetermined IP address through the terminal.

When the cable enterprise inputs an ID and a password of a user through the terminal, the security shell interface unit 210 may perform the operation S105 of authenticating the terminal by verifying whether or not the input ID and password are correct.

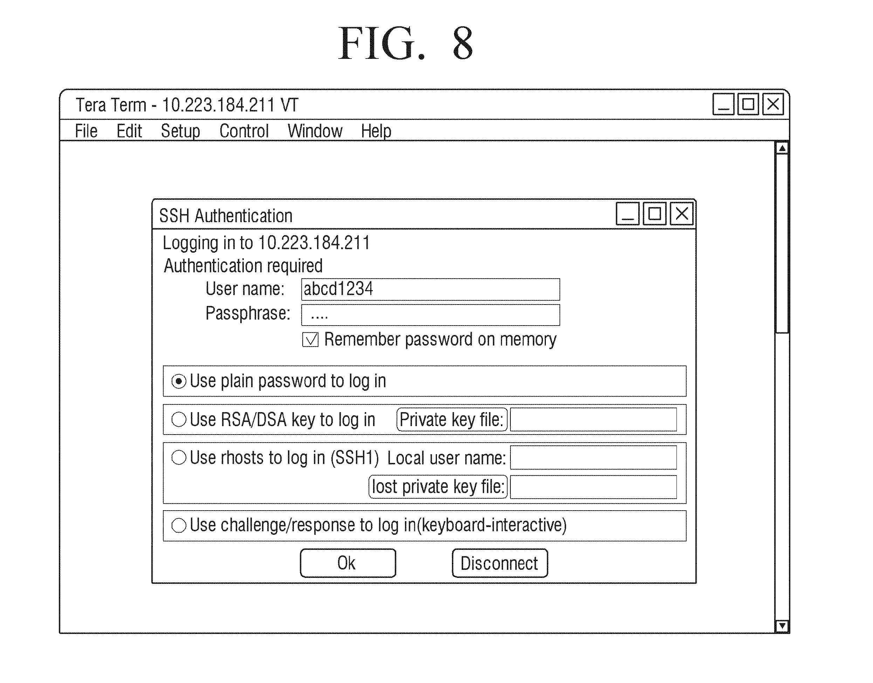

FIG. 8 is an illustrative screen illustrating the operation of authenticating the terminal in the diagnostic method of a settop box of FIG. 7.

Referring to FIG. 8, when the cable enterprise accesses the security shell interface unit 210 through the terminal, the screen of FIG. 8 is displayed on the terminal. The cable enterprise performs the operation S103 of logging in the security shell terminal by inputting an ID and a password of a user using an input device of the terminal.

After the operation S103 of logging in the security shell terminal will be described with reference back to FIG. 7. The security shell interface unit 210 may perform the operation S107 of connecting the authenticated terminal to an internal security shell module of the settop box 200 by forming the security channel of the diagnostic information processing unit 230 of the settop box 200 to the authenticated terminal.

When the security channel between the remote terminal 100 and the diagnostic information processing unit 230 is formed, the security shell interface unit 210 may transmit the remote diagnostic information menu to the terminal 100. That is, the remote diagnostic information menu may be stored in the storage unit 250 in a specific form and after the security channel between the terminal 100 and the diagnostic information processing unit 230 is formed, the remote diagnostic information menu may be transmitted to the terminal 100 by the security shell interface unit 210.

The cable enterprise may perform the operation S210 of conforming the remote diagnostic information menu on a screen of the terminal 100 and selecting a desired diagnostic information item. At this time, a cable user may select an item requesting the connection with another settop box on the remote diagnostic information menu.

After the operation S210 of selecting the diagnostic information item, the operation S211 of determining whether or not an END item of the remote diagnostic information menu is selected.

When the END item is selected, the operation of terminating the remote diagnosis of the settop box may be performed. In the case where the remote diagnosis is terminated, when diagnostic information extraction is performed by the diagnostic information processing unit 230 before the termination, the extracted diagnostic information is stored in the storage unit 250 and the remote diagnosis is terminated.

When the cable enterprise selects one item of the remote diagnostic information menu, the operation S220 of extracting diagnostic information data corresponding to the selected item from an internal operation module of the settop box 200 or reading the diagnostic information data stored in the storage unit 250 and transmitting the diagnostic information data to the security shell interface unit 210 by the diagnostic information processing unit 230 and uplink transmitting the diagnostic information data received from the diagnostic information processing unit 230 to the remote terminal in the security shell packet by the security shell interface unit 210, may be performed.

The cable enterprise may perform the operation S300 of confirming the uplinked diagnostic information data through the terminal 100.

The cable enterprise may perform the operation S400 of setting a waiting time for updating the diagnostic information. The operation S410 of setting the waiting time by the cable enterprise and determining whether or not the preset waiting time exceeds the set waiting time may be performed.

When the preset waiting time exceeds, the security shell interface unit 210 may transmit the diagnostic information updated by the diagnostic information processing unit 230 to the terminal 100 through the security shell terminal.

When the preset waiting time is not exceeded, the operation S410 may be performed again after a predetermined time has elapsed.

The cable enterprise may confirm the updated diagnostic information through the terminal 100. The updated diagnostic information may be represented in a text form or a GUI form through a screen of the terminal.

A non-transitory recording medium according to an exemplary embodiment may store a program executing a diagnostic method including the operation of providing secured access to a settop box by authenticating the terminal when the terminal accesses the settop box through a security shell terminal and the operation of transmitting diagnostic information of the settop box to the terminal side when a diagnostic information request is received from the terminal, which are executed on the settop box.

That is, the program for the diagnostic method is read from a non-transitory computer-readable recording medium in which the program for the diagnostic method is stored, through an input device. The respective operations of the read program are performed in the security shell interface unit 210, the diagnostic information processing unit 230, and the storage unit 250 included in the settop box to perform an overall operation of the diagnostic method of a settop box so that the state of the settop box is diagnosed by transmitting/receiving the diagnostic information between an operation module of the settop box and the terminal and conforming the diagnostic information of the settop box through the remote terminal.

The above-described diagnostic methods of a settop box according to various embodiments may be stored in various types of non-transitory recording media and implemented by a program code executable by a central processing unit (CPU) included in various electric apparatus.

Specifically, the code for executing the above-described methods may be stored in various type of terminal-readable recording media such as a random access memory (RAM), a flash memory, a read only memory (ROM), an erasable programmable ROM (EPROM), an electronically erasable and programmable ROM (EEPROM), a register, a hard disc, a removable disc, a memory card, a universal serial bus (USB) memory, a compact disc-ROM (CD-ROM).

## Claims

1. A settop box comprising:
a security shell interface unit which provides secured access to a settop box by authenticating a terminal when the terminal accesses the settop box through a security shell terminal;
a storage unit which stores diagnostic information of the settop box; and
a diagnostic information processing unit which provides the diagnostic information stored in the storage unit to the terminal when a diagnostic information request is received from the terminal.

2. The settop box as claimed in claim 1, wherein, when the terminal is authenticated, the security shell interface unit transmits a remote diagnostic information menu to the terminal.

3. The settop box as claimed in claim 2, wherein, when any one item of the remote diagnostic information menu of the settop box is selected at the terminal, the diagnostic information processing unit extracts diagnostic information of the settop box corresponding to the selected one item of the remote diagnostic information menu.

4. The settop box as claimed in claim 2 or 3, wherein, when an END item of the remote diagnostic information menu of the settop box is selected at the terminal, the diagnostic information processing unit terminates extraction of the diagnostic information of the settop box.

5. The settop box as claimed in any one of claims 1 to 4, wherein the diagnostic information processing unit iteratively updates the diagnostic information of the settop box for every predetermined waiting time.

6. The settop box as claimed in any one of claims 1 to 5, wherein, when the secured access between the terminal and the settop box is terminated, the storage unit stores diagnostic information according to a diagnostic information request immediately before termination of the security access.

7. The settop box as claimed in any one of claims 1 to 6, wherein the diagnostic information is graphic user interface (GUI) screen data indicating a state of the settop box.

8. A diagnostic method of a settop box comprising:
providing secured access by authenticating a terminal when the terminal accesses a settop box through a security shell terminal; and
providing diagnostic information of the settop box to the terminal when a diagnostic information request is received from the terminal.

9. The method as claimed in claim 8, further comprising transmitting a remote diagnostic information menu to the terminal when the terminal is authenticated.

10. The method as claimed in claim 9, further comprising extracting diagnostic information of the settop box corresponding to a selected item when any one item of the remote diagnostic information menu of the settop box is selected by the terminal.

11. The method as claimed in claim 9 or 10, further comprising terminating extraction of the diagnostic information of the settop box when an END item of the remote diagnostic information menu of the settop box is selected at the terminal.

12. The method as claimed in any one of claims 8 to 11, further comprising iteratively updating the diagnostic information of the settop box for every predetermined waiting time.

13. The method as claimed in any one of claims 8 to 12, further comprising storing diagnostic information according to a diagnostic information request immediately before termination of the security access when the secured access between the terminal and the settop box is terminated.

14. The method as claimed in any one of claims 8 to 14, wherein the diagnostic information is graphic user interface (GUI) screen data indicating a state of the settop box.

15. A computer-readable recording medium including a program executing a diagnostic method of a settop box,
the diagnostic information including:
providing secured access by authenticating a terminal when the terminal accesses the settop box through a security shell terminal; and
providing diagnostic information of the settop box to the terminal side when a diagnostic information request is received from the terminal.
